# EUROPEAN PATENT APPLICATION

(11) **EP 1 729 488 A1**
(43) Date of publication of application: **06.12.2006**
(21) Application number: 05011775.3
(22) Date of filing: 01.06.2005
(51) Int. Cl.: H04M 1/73

(54) **Portable electronic device with operational interface controlled by a proximity sensor**

(71) Applicant: Sony Ericsson Mobile Communications AB, 221 88 Lund (SE)
(72) Inventor: Gredvall, Olov, 222 41 Lund (SE)
(74) Representative: Asketorp, Göran

(57) **Abstract**

A portable electronic apparatus (1) and a method for controlling an operational interface of the portable electronic apparatus). The apparatus comprises a transmitter unit (10) including a transmitter (11); a receiver unit (20) including a receiver (21); and an operational interface. The transmitter and the receiver are arranged such that a signal transmitted by the transmitter (11) is received by the receiver (21) when at least the transmitter unit is facing towards and is positioned in proximity of an external surface (31,44).
The transmitter may be an LED, a cold cathode ray tube, or IR or UV transmitter. The receiver may be an optical sensor.

## Description

### Technical Field of the Invention

The present invention relates to a portable electronic apparatus comprising an operational interface and an activation unit for activating and deactivating at least one functionality of the operational interface. The invention also relates to a method for controlling the operational interface.

### Description of Related Art

A portable electronic apparatus, such as a mobile terminal, may comprise a user interface including an input interface and/or an output interface. The input interface may be divided in an operational interface with devices required to control or adjust the apparatus and a functional interface with devices required for data communication. The operational interface may comprise various input devices, such as a keypad, a joystick, and a receiver. The functional interface may comprise a microphone. The output interface may in the same way be divided into an operational interface and a functional interface. The operational interface may comprise various output devices, such as a display and/or a LED (Light Emitting Diode). The functional interface may comprise a loudspeaker. Each of the operational input interface and the operational output interface may include backlight illumination, e.g. for the keypad and the display. The output interface and/or the backlight illumination may be activated from a passive mode to an active mode or switched on when an input device of the input interface is activated, e.g. by pressing a key, or when an application of the portable electronic apparatus is activated, such as in response to an incoming call or message. The backlight illumination and/or the output interface may be automatically switched off or inactivated, e.g. if the input interface has not been used for a predetermined period of time or if the application has been deactivated.

The portable electronic apparatus may have a design allowing it to be stored in a pocket or a bag when it is not used. This poses a risk that one of the input devices, which may be used to switch on an output device or the backlight, is unintentionally activated. Thus, the output device and/or the backlight illumination will be switched on even if the user did not intend to do so. Unintentional activation of the output device and/or the backlight illumination means that they will be unnecessarily switched on. Consequently, power, which is a valuable resource in a portable electronic apparatus, is wasted.

### Summary of the Invention

It is an object of the invention to detect activation of at least one output device of a user interface of a portable electronic apparatus.

According to a first aspect, a portable electronic apparatus comprises a transmitter unit, a receiver unit, an operational interface, and an activation unit for controlling the operational interface. The transmitter unit and the receiver unit are arranged such that a signal transmitted by the transmitter unit is received by the receiver unit when the transmitter unit is facing towards and is positioned in proximity of an external surface. The receiver unit is arranged to issue a detection indication in response to receiving the signal. The activation unit is responsive to the detection indication.

The activation unit may be adapted to at least inactivate a portion of the operational interface in response to the detection indication.

The transmitter unit may comprise a signal generator arranged to generate a modulated drive signal for generating the signal to be transmitted by the transmitter unit.

A transmitter of the transmitter unit may be integrated with the operational interface. The transmitter may be an optical transmitter. The optical transmitter may be a backlight of the operational interface. Alternatively or additionally, the transmitter may be a LED positioned in proximity to a receiver of the receiver unit.

A transmitter of the transmitter unit and a receiver of the receiver unit may be positioned on the same side of a housing of the portable electronic apparatus.

The operational interface may comprise a display including a backlight acting as the transmitter.

The portable electronic apparatus may be a portable or handheld mobile radio communication equipment, a mobile radio terminal, a mobile telephone, a pager, a communicator, an electronic organizer, or a smartphone.

According to a second aspect, a method for controlling an operational interface of a portable electronic apparatus comprises transmitting a signal from the portable electronic device; determining whether the transmitted signal was received in the portable electronic apparatus; and controlling the operational interface if it was determined that the signal was received.

The step of transmitting may comprise generating a drive signal having a predetermined frequency for a transmitter of the portable electronic apparatus.

The step of determining may comprise inactivating at least a portion of the operational interface if it is determined that the signal was received, and not inactivate the device if it is determined that the signal was not received.

Further embodiments of the invention are defined in the dependent claims. It is an advantage of the invention that unintentional activation of an output device may be detected.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of the invention, reference being made to the accompanying drawings, in which:
Fig. 1 is a front view of a portable electronic apparatus;
Fig. 2 is a block diagram of an embodiment of the portable electronic apparatus;
Fig. 3 is cross-sectional view of a an embodiment of the portable electronic apparatus;
Fig. 4 is a cross-sectional view of an embodiment of the portable electronic apparatus;
Figs. 5a-5c are signal diagrams of embodiments of a drive signal; and
Fig. 6 is a flow-chart of one embodiment of a method for controlling an operational interface.

### Detailed Description of Embodiments

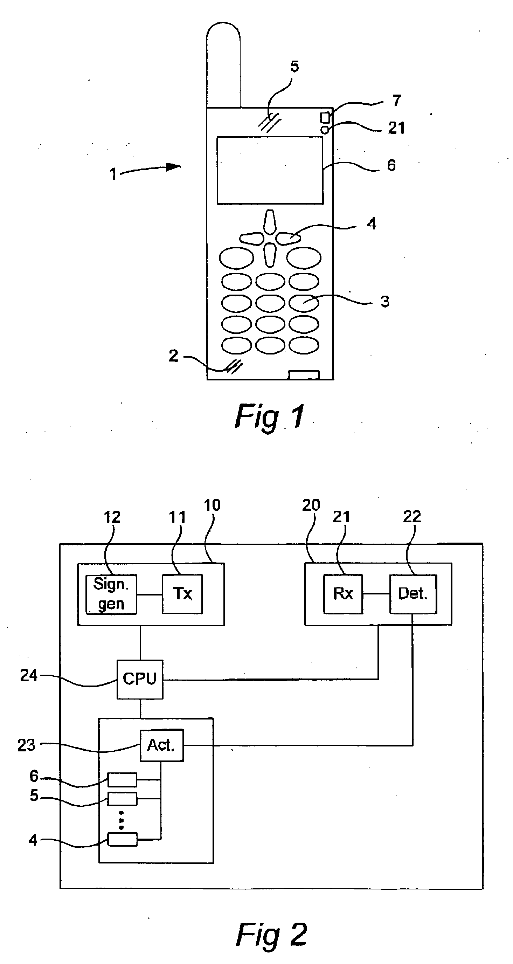

Fig. 1 illustrates a portable electronic apparatus 1. The portable electronic apparatus 1 may be a portable or handheld mobile radio communication equipment, a mobile radio terminal, a mobile telephone, a pager, a communicator, an electronic organizer, or a smartphone. In the embodiment according to Fig. 1, the portable communication apparatus 1 is embodied as a mobile terminal.

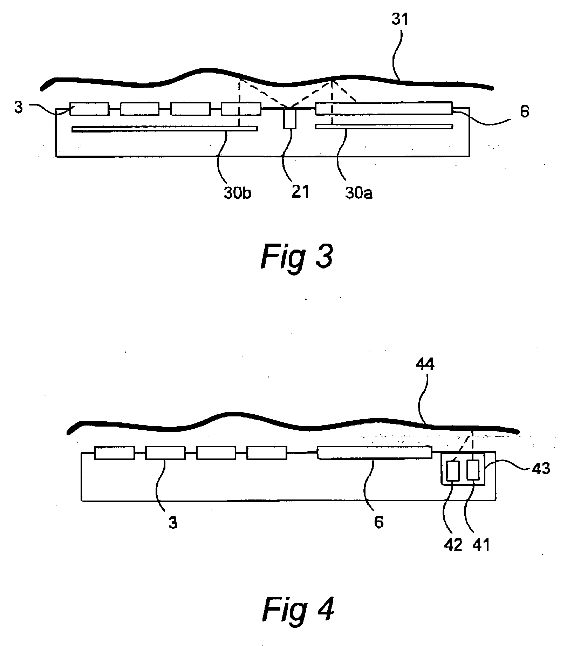

Figs. 1 and 2 illustrate various components of the portable electronic apparatus. A user interface is provided to enable interaction with the portable electronic apparatus 1. The user interface may comprise an input interface and an output interface. Each of the input interface and the output interface may comprise an operational interface and a functional interface. The functional input interface may comprise various input devices, such as a microphone 2. The operational input interface may comprise various input devices, a keypad 3, and a joystick or rocker pad 4. The operational input interface may also comprise various applications, such as call establishment application. The user may input information into or activate various functions of the portable electronic apparatus 1 by means of the input devices. The functional output interface may comprise various output devices, such as a loudspeaker 5. The operational output interface may comprise various output devices, such as a display 6, a LED (Light Emitting Diode) 7, and a backlight 30a, 30b (Fig. 3) for illuminating other devices of the operational interface, such as the display 6 and/or the keypad 3. The operational interfaces relate to the operation of the portable electronic apparatus 1.

In order to i.a. prevent unintentional activation of either of the operational input interface and/or the operational output interface, there is arranged a transmitter unit 10 including a transmitter 11. The transmitter unit 10 may also include a signal generator 12. A receiver unit 20 includes an receiver 21. The receiver unit 20 may also comprise a detector unit 22. The transmitter 11 and the receiver 21 are arranged such that a signal is transmitted by the transmitter 11. The signal is received by the receiver 21 when the transmitter unit 10 and/or the receiver unit 20 is facing towards and is positioned in proximity of an external surface. In that position of the output device, the user can not observe it or has no desire to observe it, wherein it may be switched off if it is in an operative state.

The transmitter 11 may be an optical transmitter, such as a light source, e.g. an LED, a cold cathode ray tube, or an electroluminescence plate. Alternatively, the transmitter is an IR (Infra Red), UV (Ultra violet) or an ultrasonic transmitter. The transmitter may also be a transmitter of a proximity detector, such as a capacitive, or IR or an acoustic proximity detector. The transmitter 21 may be provided as a separate unit or be integrated with the operational interface.

Similarly, the receiver 21 may be an optical receiver. Alternatively, the receiver is an IR UV or ultrasonic receiver. The receiver may also be a receiver of a proximity detector, such as a capacitive, or IR or an acoustic proximity detector.

For example, the transmitter 21 may be a backlight of the operational interface, such as a backlight of the display 6 and/or the keypad 3. The keys of the keypad may be at least partly transparent. The transmitter may be positioned within a housing of the portable electronic apparatus 1. Thus, light emitted by the transmitter will pass through the keys, and a backlight of the keys is provided as well as the transmitter. Similarly, the display 6 may be a transmissive or semi-transmissive display, such as an LCD (Liquid Crystal Display), having a backlight for illuminating a backside of the display panel. A transmissive display allows a viewer to observe light emitted from the backlight and transmitted through the display panel in a dark place, and to observe external light, such as natural light, reflected on the display panel without the use of backlight in a light place. Thus, the light transmitted from behind the display panel may function as backlight as well as the transmitter 11.

LED 7 may form part of the operational interface. LED 7 may be provided to indicate an operative mode of the portable electronic apparatus 1. The operative mode may be a standby mode or a communication mode. In the standby mode, LED 7 may flash with a first frequency. In the communication mode the LED 7 may flash with a second frequency. LED 7 may also serve as the transmitter, wherein it may flash with a third frequency. The third frequency may be initiated in response to detecting activation of an input device. The duration of a drive signal having the third frequency for LED 7 may have a predetermined duration, after which a drive signal with the first or second frequency is generated. If the receiver 21 is positioned in proximity of LED 7, as is illustrated in Fig. 1, LED 7 may also function as the transmitter.

An activation unit 23 may be provided to control the operational interface. The activation unit 23 may be adapted to activate and inactivate output devices and/or input devices of the operational interface. The activation unit 23 may be responsive to a detection indication issued by the detection unit 22. The activation unit may also activate any of the output devices in response to detecting activation of any input device, such as pressing a key of the keypad 3. Alternatively or additionally, the activation unit 23 may activate any of the output devices in response to sensing activation of an application, such as sensing an incoming call or message.

A controller 24 may be responsible for the overall operation of the transmitter unit 10 and the receiver unit 20. The controller 24 may be implemented by a CPU (Central Processing Unit). Furthermore, the controller 24 may implement the activation unit 23.

The transmitter 11 should be arranged in the housing of the portable electronic apparatus 1 such that the receiver 21 may receive a signal, such as an optical signal, transmitted by the transmitter 11. The signal may be transmitted in response to activating at least one output device of the operational interface. Thus, it is possible to detect activation of the output device, such as detecting light from a light source of the operational interface. Furthermore, the transmitter 11 may be arranged relative the receiver 21 such that the receiver 21 receives the signal when at least one output device, such as the display 6, faces towards and is positioned in proximity of an external surface, such as the fabric of a pocket or bag, or a table surface. Positioning the output device towards the external surface may be an indication that the user does not want to use the portable electronic apparatus 1. Unintentional activation of the output device, e.g. by unintentionally pressing a key of the keypad 3, may be detected when the output device faces and is positioned in proximity of an external surface. When the transmitter 21 is facing towards the external surface the signal is reflected against the external surface and received by the receiver 21. Thus, the receiver 21 may receive the reflected signal if it is positioned in proximity of the transmitter 11. The actual distance between the transmitter 11 and the receiver 21 may depend on the transmission power, free space provided around the transmitter /receiver, angles between transmitter/receiver, etc. The distance may e.g. be in the range of 2-10 mm. However, the distance may be different on other embodiments.

Fig. 3 illustrates a first embodiment of the portable electronic apparatus, wherein a backlight 30a of the display 6 acts as the transmitter. Light transmitted by the backlight 30a is reflected (indicated by dotted lines in Fig. 3) by the external surface 31. Light reflected by the external surface 31 is received by the receiver 21. The portable communication apparatus of Fig. 3 may also comprise a second backlight 30b of the keypad 3. Backlight 30b may act as the transmitter in the same manner as backlight 30a. At least one key of the keypad 3 is at least partly transparent. Thus, light transmitted by backlight 30a may pass the key be reflected by the external surface 31 and received by the receiver 21. Backlight 30a, and 30b may together function as the transmitter. The receiver 21 may be positioned between backlight 30a and backlight 30b. Having dual transmitter sources has the advantage that the probability that the signal is reflected such that the receiver 21 may receive it increases. The backlight 30a, 30b may e.g. comprise one or several light sources, such as LEDs, cold cathode ray tubes, or one or several electroluminescence panels.

In another embodiment, the portable electronic apparatus only comprises either of backlight 30a or 30b acting as the transmitter.

Fig. 4 illustrates another embodiment wherein the transmitter 41 and the receiver 42 are positioned within a cavity 43 of the housing of the portable electronic apparatus transmitter 41 may e.g. be provided by a LED, which also acts as an indicator for indicating the operational mode of the portable electronic apparatus. Light transmitted by transmitter 41 may be reflected by external surface 44 and received by receiver 42. The cavity may be positioned on the same side of the housing of the portable electronic apparatus as at least one output device. Thus, when the output device is facing towards and is positioned in proximity of the external surface 42, the signal transmitted by the transmitter may be reflected by the external surface 42. Thus, it may be detected that the portable electronic apparatus is positioned in e.g. a pocket or a bag. Positioning the transmitter 41 and the receiver 21 in a cavity has the advantage that the signal is reflected even if the housing of the portable electronic apparatus abuts the external surface, 44.

The signal generator 12 may be adapted to generate a drive signal for the transmitter 11. The drive signal may may be a modulated signal, such as a PWM (Pulse Width Modulated) signal, wherein the voltage of the drive signal is modulated. To distinguish between an optical signal or light transmitted by the transmitter and normal light (such as sun light or light from an light source external to the portable electronic apparatus), the transmitter unit 10 may be adapted to transmit an optical signal having a predefined frequency, which the receiver unit 20 is adapted to detect.

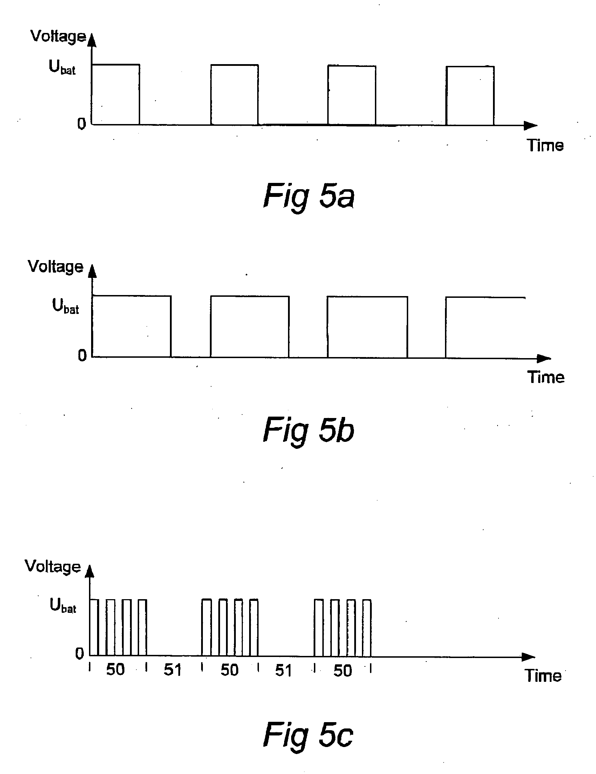

Figs. 5a-5c illustrate embodiments for the drive signal generated by the signal generator 12 for the transmitter. The transmitter 11 may generate the optical signal in response to the drive signal. The drive signal may have a certain duty cycle. The frequency of the drive signal may in a first embodiment be in the range of 11-50 Hz. In another embodiment, the frequency of the drive signal is above 50 Hz, wherein the on/off switching of the backlight is invisible for the human eye. In the embodiment of Fig. 5a, the duty cycle of the drive signal is less than 50%. In the embodiment of Fig. 5b, the duty cycle more than the 50%. In still another embodiment (not illustrated) the duty cycle may be substantially 50%. If the drive signal is applied to a light source, the brightness provided by employing the drive signal according to Fig. 5a is lower than the brightness provided by the drive signal according to Fig. 5b. The voltage of the drive signal during the duty cycle may correspond to the battery voltage U_{bat}.

Fig. 5c illustrates a drive signal, that can be used for controlling the brightness of a light source and the frequency of an optical signal intended for the receiver 21. During a first time period 50, the voltage of the drive signal is varying higher and lower. During a second time period 51, the voltage of the drive signal is constant (0 volt in this case). The second time period have a first repetition rate, such as 1 kHz. The frequency of the drive signal during the first time period 50 is higher than the repetition rate of the first time period and the second time period 51, e.g. 50 kHz. The signal transmitted by the transmitter unit 10 during the first time period 50 may be detectable by the receiver unit 20. The duration of the first and the second time period, respectively, may be used as a brightness control for setting the brightness of a light source, such as backlight 30a and/or 30b.

The receiver 21 may be a light sensor, which is sensible to the wavelength at which the transmitter 11 transmits the optical signal. The receiver 21 may provide an electrical signal in response to receiving the optical signal. The detector may be responsive to an optical signal having a certain frequency. Thus by modulating the drive signal, the frequency of the optical signal may be modulated. The electrical signal may be received by the detector 22. The detector 22 be implemented by a pulse detector. The detector 22 may determine the frequency of the electrical signal, e.g. by counting the frequency at which pulses of the electrical signal is generated. The detector 21 may be adapted to generate a detection indication in response to detecting the predetermined frequency. The detection indication may e.g. be a signal or message. The detection indication may be transmitted to the activation unit 23. The detection indication may comprise the value of the detected frequency. The activation unit 23 may be responsive to the detection indication. The activation unit 23 may be adapted to inactivate any output device in response to receiving the detection indication. It is an advantage of the invention that unintentional activation of an output device may be detected. If the output device was unintentionally activated it may be inactivated very quickly, wherein the power consumption of the portable electronic apparatus is improved compared to inactivating the output device after a predetermined time period, such as 5 seconds.

Activation of an output device may also activate the transmitter unit 10 and the receiver unit 20. If the output device is unintentionally activated, e.g. when it is facing towards and is positioned in proximity to a external surface, the detection unit 23 may generate the detection indication. In response to the detection indication, the activation unit 23 may inactivate any output device having been unintentionally activated. The activation unit 23 may be responsive to a predetermined frequency. Thus, the activation unit 23 may compare the value of the detected frequency to a predetermined frequency value stored in the portable electronic apparatus 1. If the values match, any active output device may be inactivated. If the values do not match, the output device is maintained in an active mode at least for a predetermined period of time.

Transmission and reception between the transmitter unit 10 and the receiver unit 20 may be controlled by the controller 24. The controller may indicate to the receiver unit 20 the clock cycle at which transmission is initiated by the transmitter unit 10. Also, the duration of the duty cycle of the drive signal may be indicated, wherein the transmitter unit knows when to expect the optical signal.

Each of the signal generator 12, the detector unit 22, and the activation unit 23 may be implemented by software code portions stored in a memory to be run by a processor, such as controller 24. Alternatively, the signal generator 12, the detector unit 22, and the activation unit 23 may be implemented in hardware. The signal generator 12 may be implemented by a VCO (Voltage Controlled Oscillator). The detector unit 22, and the activation unit 23 may be implemented by a common or separate ASICs (Application Specific Integrated Circuit) or an FPGA (Field Programmable Gate Array).

The receiver 21 may also used for controlling the brightness of the backlight 30a, 30b. Light can be detected by the receiver 21, which generates a signal proportional to brightness of ambient light. From that information, a brightness controller, e.g. implemented by controller 24, may adjust the duty cycle of the drive signal for the backlight.

Providing detection of unintentional activation of an input device together with brightness control has the advantage that it is possible to detect whether the portable electronic apparatus 1 just is in a very dark environment or is positioned against or in proximity of a external surface. Brightness control is not need when the portable electronic apparatus is facing an external surface at a short distance. Not having detection of unintentional activation of the output device poses a risk that the receiver indicates increased brightness to the brightness control in response to reflected light from the external surface. In response to the sensed reflected light the brightness control may increase the brightness of the backlight. Thus, the receiver may once again experience increased brightness, wherein the brightness control increases the backlight again. This could result in brightness control resonance. However, if the light transmitted by the backlight comprises a signal according to the invention, brightness control resonance is avoided.

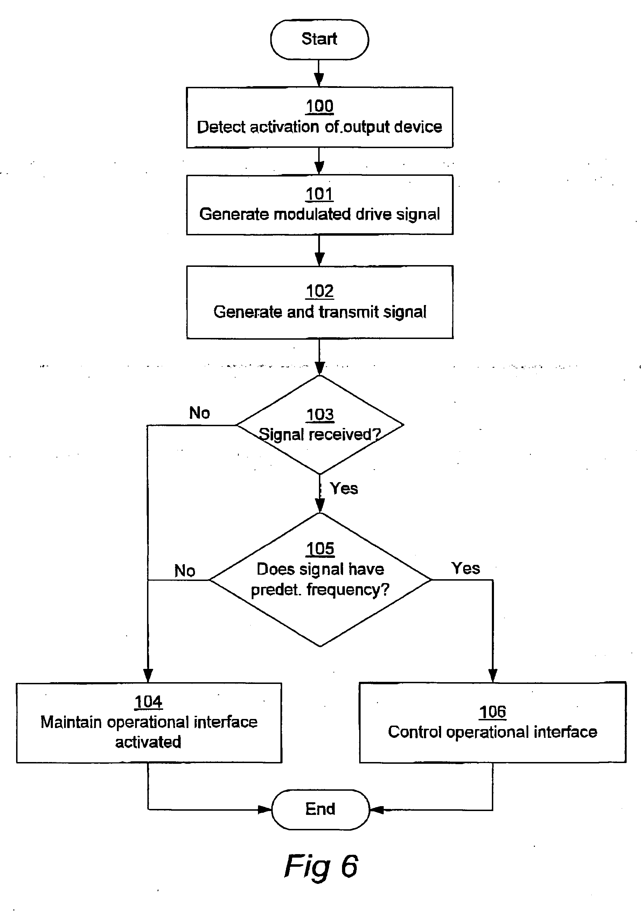

Fig. 6 illustrates one embodiment of a method for controlling an operational interface comprising an input device, and an output device. The method may be initiated in response to activating the input device, such as by pressing a key of the keypad 3. In a first step 100, activation of an output device, such as the display 6, is detected. A modulated drive signal is generated in step 101 in response to detecting activation of the output device in step 100. In step 102, the signal is generated and transmitted by the transmitter unit 10. In step 103, it is determined whether the signal is received by the receiver unit 20. The determination in step 103 may be made by the controller 24 in response to a detection indication issued by the detector 22. If the answer in step 103 is no, the procedure proceeds to step 104. In step 104, it is determined that the output device should be maintained activated, i.e. the output device should not be inactivated and no further step need to be taken, whereby the procedure is ended. If the answer in step 103 is yes, the procedure proceeds to step 105, wherein it is determined whether the received signal has a predetermined frequency. The frequency may be detected by the detector 22 and be forwarded to the controller 24. The determination in step 105 may be performed by controller 24 by comparing it to a stored frequency value associated with the frequency of the transmitted signal. If the stored frequency value and the value of the determined frequency match it is known that the signal was transmitted by the transmitter unit 10. If the answer in step 105 is no, the procedure proceeds to step 104. If the answer in step 105 is yes, the procedure proceeds to step 106. In step 106, the operational interface is controlled. At least a portion of the operational interface, such as one output device, which is in an operative mode and thus active, may be inactivated or maintained in the operative mode. Then, the procedure is ended.

In another embodiment of the method according to Fig. 6, step 100 is not carried out and the signal transmitted in step 102 is continuously generated and transmitted. Step 103 may be carried out at predetermined time intervals to check whether the signal is received.

In the above-described embodiments, the drive signal has been described as frequency of pulse width modulated. In other embodiments, the electrical signal may be phase modulated, such as phase shift modulated, which the detector 22 may be adapted to detect.

The invention may be embedded in a computer program product, which enables implementation of the method and functions described herein. The invention may be carried out when the computer program product is loaded and run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A portable electronic apparatus (1), comprising
a transmitter unit (10);
a receiver unit (20);
an operational interface; and
an activation unit for controlling the operational interface; wherein
the transmitter unit and the receiver unit are arranged such that a signal transmitted by the transmitter unit (10) is received by the receiver unit (20) when the transmitter unit is facing towards and is positioned in proximity of an external surface (31, 44);
the receiver unit is arranged to issue a detection indication in response to receiving the signal; and
the activation unit (23) is responsive to the detection indication.

2. The portable electronic device according to claim 1, wherein the activation unit is adapted to at least inactivate a portion of the operational interface in response to the detection indication.

3. The portable electronic apparatus according to claim 2, wherein the transmitter unit (10) comprises a signal generator (12) arranged to generate a modulated drive signal for generating the signal to be transmitted by the transmitter unit.

4. The portable electronic apparatus according to any of the previous claims, wherein a transmitter (21) of the transmitter unit (10) is integrated with the operational interface.

5. The portable electronic apparatus according to claim 4, wherein the transmitter (21) is an optical transmitter.

6. The portable electronic device according to claim 4 or 5, wherein the optical transmitter is a backlight (30a, 30b) of the operational interface.

7. The portable electronic apparatus according to any of the claims 1 to 5, wherein the transmitter is a LED (7, 41) positioned in proximity to a receiver (42) of the receiver unit (20).

8. The portable electronic apparatus according to any of the previous claims, wherein a transmitter (11) of the transmitter unit (10) and a receiver (21) of the receiver unit (20) are positioned on the same side of a housing of the portable electronic apparatus.

9. The portable electronic interface according to any of the previous claims, wherein the operational interface comprises a display (6) including a backlight (30a) acting as the transmitter.

10. The portable electronic apparatus according to any of the previous claims, wherein the portable electronic apparatus (1) is a portable or handheld mobile radio communication equipment, a mobile radio terminal, a mobile telephone, a pager, a communicator, an electronic organizer, or a smartphone.

11. A method for controlling an operational interface of a portable electronic apparatus (1), comprising
transmitting a signal from the portable electronic device (1);
determining whether the transmitted signal was received in the portable electronic apparatus (1); and
controlling the operational interface if it was determined that the signal was received.

12. The method according to claim 11, wherein the step of transmitting comprises generating a drive signal having a predetermined frequency for a transmitter (11) of the portable electronic apparatus (1).

13. The method according to claim 11 or 12, wherein the step of determining further comprises inactivating at least a portion of the operational interface (6, 7) if it is determined that the signal was received, and not inactivate the device if it is determined that the signal was not received.
